Europäisches Patentamt

European Patent Office

Office européen des brevets

(19)

(11) **EP 1 389 383 B1**

(12) **EUROPÄISCHE PATENTSCHRIFT**

(45) Veröffentlichungstag und Bekanntmachung des Hinweises auf die Patenterteilung:
**06.10.2004 Patentblatt 2004/41**

(51) Int Cl.⁷: **H04L 25/20**, H04L 25/08

(21) Anmeldenummer: 02730256.1

(86) Internationale Anmeldenummer:
**PCT/EP2002/005355**

(22) Anmeldetag: **15.05.2002**

(87) Internationale Veröffentlichungsnummer:
**WO 2002/096050 (28.11.2002 Gazette 2002/48)**

(54) **TRANSMITTER ZUR ÜBERTRAGUNG DIGITALER DATEN ÜBER EINE ÜBERTRAGUNGSLEITUNG**

TRANSMITTER FOR TRANSMITTING DIGITAL DATA OVER A TRANSMISSION LINE

EMETTEUR PERMETTANT LA TRANSMISSION DE DONNEES NUMERIQUES PAR L'INTERMEDIAIRE D'UNE LIGNE DE TRANSMISSION

(84) Benannte Vertragsstaaten:
**DE**

(30) Priorität: **22.05.2001 DE 10125023**

(43) Veröffentlichungstag der Anmeldung:
**18.02.2004 Patentblatt 2004/08**

(73) Patentinhaber: **Infineon Technologies AG**
**81669 München (DE)**

(72) Erfinder:
• **GREGORIUS, Peter**
**81476 München (DE)**
• **HANNEBERG, Armin**
**85540 Haar (DE)**

(74) Vertreter: **Reinhard - Skuhra - Weise & Partner**
**Postfach 44 01 51**
**80750 München (DE)**

(56) Entgegenhaltungen:
**EP-A- 0 963 083**          **GB-A- 2 354 125**
**US-A- 5 504 782**

• **BOURAS S ET AL: "Current mode baseband interface for communication applications" ELECTRONICS, CIRCUITS AND SYSTEMS, 1999. PROCEEDINGS OF ICECS '99. THE 6TH IEEE INTERNATIONAL CONFERENCE ON PAFOS, CYPRUS 5-8 SEPT. 1999, PISCATAWAY, NJ, USA,IEEE, US, 5. September 1999 (1999-09-05), Seiten 533-536, XP010361492 ISBN: 0-7803-5682-9**

**Beschreibung**

Die Erfindung betrifft einen Transmitter zur Übertragung digitaler Daten über eine Übertragungsleitung, der insbesondere in Telekommunikationssystemen eingesetzt wird.

Um eine fehlerfreie Datenübertragung zu gewährleisten, muss die Impulsform am Ausgang eines Transmitters (Line Interface Unit) spezielle Spezifikationen einhalten (siehe CCITT G.703 Physical/Electrical Characteristics of Hirarchical Digital Interfaces). In Abhängigkeit von der Datenrate und dem gewählten Standard sind entsprechende Normpulsmasken vorgegeben, die von den Transmittern eingehalten werden müssen.

Bislang entworfene Transmitter konnten die vorgegebenen Normen nur dann befriedigend erfüllen, wenn ausreichend Betriebsspannung vorhanden war. Das Konzept solcher bekannter Line Interface Units basiert vorwiegend auf spannungsverarbeitenden Prinzipien im Signalpfad der Transmitter, die eine gewisse Schwankung der Arbeitspunkte in den entsprechenden Schaltkreisen und damit eine in der Qualität eingeschränkte Funktion des gesamten Transmitters bewirken konnten. Zudem sind diese Prinzipien nur unzureichend für moderne Deep-Submicron CMOS Prozesse geeignet und der daraus eingeschränkten Spannungsfestigkeit der regulären MOS-Transistoren.

Darüber hinaus haben die Schaltkreise bekannter Transmitter relativ hochohmige Knotenimpedanzen, die wiederum starkes thermisches Rauschen verursachen und somit einen limitierten Signal-Rauschabstand haben. Im übrigen waren die bekannten Transmitter empfindlich gegenüber Offset-Spannungen, die einen unerwünschten Gleichstrom über der Last am Ausgang verursachen. Insbesondere die Vorsättigung eines nachfolgenden Übertragers kann zu zusätzlichen unerwünschten Verzerrungen des Signals führen.

Es existieren eine Reihe von Veröffentlichungen, in welchen spannungsverarbeitende Transmitter beschrieben sind. Es wird beispielsweise auf:

H. Herrmann und R. Koch: "A 1.544Mb/s CMOS Line Driver for 22.8Ω Load", IEEE Journal of Solid-State Circuits, Juni 1990, Seite 760 ff.,

Haideh Khorramabadi: "Highly Efficient CMOS Line Driver with 80dB Linearity for ISDN U-Interface Applications", IEEE Journal of Solid-State Circuits, Dezember 1992, Seite 1723 ff., und

M. Moyal, M. Gröbel und Th. Blon: "A 25kft, 768kb/s CMOS Analog Front End for Multible-Bit-Rate DSL Transceiver", IEEE Journal of Solid-State Circuits, Dezember 1999, Seite 1961 ff.

und die darin genannten Fundstellen verwiesen. Die bekannten Lösungen zeigen jedoch alle die vorstehend genannten Nacheile.

Es ist daher die Aufgabe der vorliegenden Erfindung, einen Transmitter zur Übertragung digitaler Daten zu schaffen, der eine Generierung von Impulsen mit wesentlich höherer Qualität bzw. Genauigkeit ermöglicht und die Nachteile von spannungsverarbeitenden Prinzipien zur Signalgenerierung vermeidet.

Gelöst wird diese Aufgabe durch die im Patentanspruch 1 angegebenen Merkmale. Weitere Ausgestaltungen der Erfindung sind Gegenstand von Unteransprüchen.

Der wesentliche erfinderische Gedanke besteht darin, die interne Signalverarbeitung des Transmitters auf Strom basierend durchzuführen; in der Fachliteratur wird diese Art der Signalverarbeitung als "Current-Mode-Approach" bezeichnet. Lediglich das Interface zur "Aussenwelt' wird vorzugsweise mit spannungsfesteren Transistoren zum Treiben der Signale auf die Last bzw. auf das Kabel realisiert.

Ferner wird erfindungsgemäß vermieden, Rückkoppelschleifen (Feedback Loops) im Signalpfad, z.B. im Filter und den Stromverstärkern, des Transmitters vorzusehen. Rückkoppelschleifen können die Stabilität des Transmitters negativ beeinflussen.

Der erfindungsgemäße Transmitter zur Übertragung digitaler Daten über einen Übertragungsleitung umfasst daher wenigstens folgende strombetriebene Schaltkreise ohne Rückkoppelschleifen, nämlich:

- einen stromtreibenden Digital/Analog-Konverter, der den Eingang des Transmitters bildet;
- einen strombetriebenen Formfilter zum Formen (Glätten) der vom Digital/Analog-Konverter gelieferten quantisierten Stromimpulse;
- einen Leitungstreiber zur Strom/Spannungs-Wandlung, der den Ausgang des Transmitters bildet; sowie
- eine Schaltung zur Offset-Kompensation.

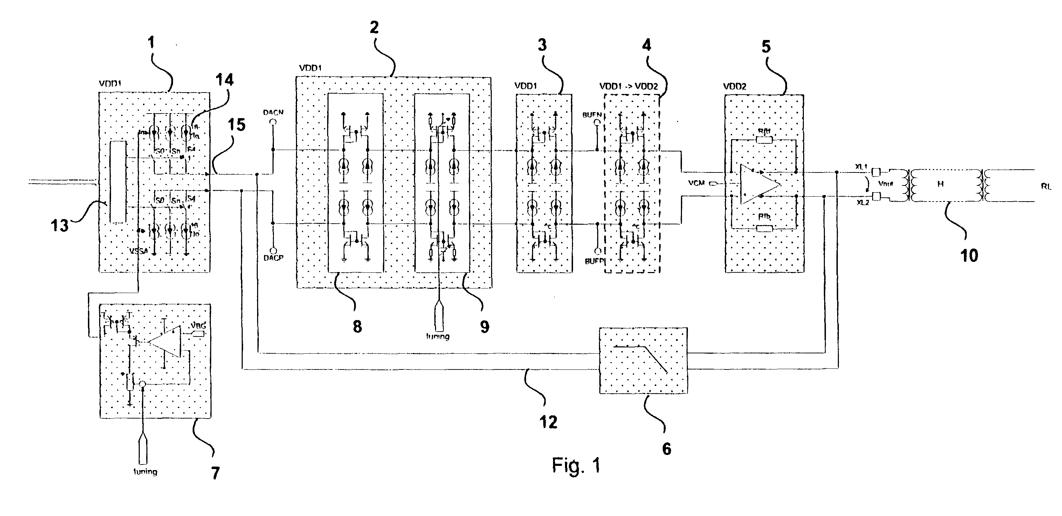

Auch das Dokument BOURAS et al. 'Current mode baseband interface for communication applications', IEEE PROCEEDINGS OF ICECS '99, Piscataway, NJ, USA: IEEE, 1999, Seiten 533-536, offenbart einen Transmitter (Figur 1, TX-Path) zur Übertragung digitaler Daten über eine Übertragungsleitung, der nach dem sogenannten Current-Mode-Approach realisiert ist. Der Transmitter umfasst einen am Transmittereingang angeordneten stromtreibenden Digital/Analog-Wandler (Figur 1, DAC), einen strombetriebenen Formfilter (Figur 1, Reconstruction-Filter) zum Formen der vom Digital/Analog-Wandler gelieferten Stromimpulse, einen Leitungstreiber (Figur 1, PGA), der eine Strom/Spannungskonvertierung durchführt, und eine Schaltung zur OffsetKompensation (Figur 1, Offset-Adjustment).

Der Transmitter des Anspruchs 1 unterscheidet sich von dem bekannten Transmitter, dass die Schaltung zur Offset-Kompensation in einem Rückkoppelpfad des Transmitters angeordnet ist und dass der Formfilter mit Stromspiegeln aufgebaut ist, wobei die Stromspiegel einen Spannungsregler aufweisen, der die Spannung an einem Signaleingang und/oder einem Ausgang der Stromspiegel konstant hält.

Ferner kann ein Level-Shifter zur Umsetzung einer niedrigeren Versorgungsspannung auf eine höhere Versorgungsspannung vorgesehen sein;

Am Ausgang des Digital/Analog-Konverters ist vorzugsweise ein strombetriebener Verstärker bzw. Buffer zur Isolation des Konverterausgangs angeordnet.

Der strcmbetriebene Verstärker teilt zunächst die vom Digital/Analog-Konverter gelieferten Impulse in ihrer Amplitude um einen bestimmten Faktor N. Die Bezeichnung Verstärker soll im folgenden auch Verstärker umfassen, die mit Untersetzung arbeiten, d.h. den Strom teilen.

Der strombetriebene Verstärker bildet im wesentlichen eine stromgesteuerte Stromquelle und umfasst gemäß einer bevorzugten Ausführungsform einen Stromspiegel.

Gemäß einer Ausgestaltung der Erfindung umfasst der strombetriebene Formfilter einen strombetriebenen Tiefpassfilter zum Formen der Datenimpulse, der vorzugsweise ebenfalls einen Stromspiegel aufweist. Der strombetriebene Formfilter bewirkt eine gewünschte Vorverzerrung, je nach gewähltem Standard und/oder Applikation, der am Transmitterausgang ausgegebenen Sendeimpulse und dient gleichzeitig als Formfilter für die DA-Stromimpulse.

Gemäß einer bevorzugten Ausgestaltung der Erfindung ist die Grenzfrequenz des Tiefpassfilters schaltbar.

Nach dem Formfilter ist im Signalpfad des Transmitters vorzugsweise ein stromgesteuerter Stromverstärker vorgesehen, der ebenfalls aus einer Stromspiegelschaltung aufgebaut sein kann.

Im Signalpfad des Transmitters ist gemäß einer bevorzugten Ausgestaltung der Erfindung ferner ein stromgesteuerter Level-Shifter vorgesehen, der es ermöglicht, den davor liegenden Schaltungsteil mit einer niedrigeren Versorgungsspannung zu betreiben. Der Level-Shifter ist vorzugsweise ebenfalls mit einem Stromspiegel aufgebaut.

Gemäß einer bevorzugten Ausgestaltung der Erfindung sind die im Transmitter verwendeten Stromspiegel mit einer Spannungsregelung ausgestattet, die das Knotenpotential am Eingang und/oder am Ausgang der Stromspiegels im wesentlichen konstant hält. Somit ist das Spannungsniveau an diesem Knoten nahezu konstant und zusätzliche Verzerrungen durch eine Verschiebung des Arbeitspunktes und/oder Umladeeffekte durch parasitäre Kapazitäten werden reduziert. Die Spannungsregelung bewirkt somit, dass sich die Schaltung immer im optimalen Arbeitspunkt befindet.

Die in einem Rückkoppelpfad angeordnete Schaltung zur Offset-Kompensation ist vorzugsweise mittels Transkonduktanzstufen aufgebaut. Die Offset-Kompensation sollte eine Tiefpasscharakteristik haben, damit der am Ausgang geforderte Impuls den Standards entsprechen kann. In Vorwärtsrichtung wirkt der Tiefpass mit seiner Polstelle als Hochpass mit einer Nullstelle in der Gesamtübertragungsfunktion des Transmitters. Bei der Dimensionierung muss darauf geachtet werden, das die wirksame Nullstelle in Vorwärtsrichtung unterhalb der kleinsten spektralen Anteile des Sendeimpulses liegt.

Der Transmitter ist vorzugsweise in Differenzpfad-Technik ausgeführt.

Die Erfindung wird nachstehend anhand der Figuren beispielhaft näher erläutert. Es zeigen:

Fig.1: ein Ausführungsbeispiel eines auf Stromverarbeitung basierenden Transmitters in Differenzpfad-Technik;

Fig.2: einen Stromverstärker in Differenzpfad-Technik gemäß einer Ausgestaltung der Erfindung;

Fig.3: eine Ausführungsform eines Stromfilters;

Fig.4: einen aus Stromspiegeln aufgebauten Level-Shifter gemäß einer Ausführungsform der Erfindung;

Fig. 5: ein erstes Ausführungsbeispiel eines Spannungsreglers für einen Stromspiegel;

Fig. 6: ein weiteres Ausführungsbeispiel eines Spannungsreglers für einen Stromspiegel;

Fig. 7: ein erstes Ausführungsbeispiel einer Feedback-Schaltung zur Offsetkompensation;

Fig. 8: ein einfaches Ersatzschaltbild zur Berechnung der Übertragungscharakteristik im Frequenzbereich für den Transmitter nach Figur 1.

Fig.1 zeigt ein schematisches Blockschaltbild eines Transmitters, bestehend aus einem Digital/Analog-Konverter 1, einem Formfilter 2, einem Stromverstärker 3, einem Level-Shifter 4 und einem Leitungstreiber 5. Die Elemente 1-5 bilden den Signalpfad des Transmitters.

Im Rückkoppelpfad 12 des Transmitters ist eine Schaltung zur Offset-Kompensation 6 mit Tiefpasscharakteristik vorgesehen.

Eine Referenzstromerzeugung 7 stellt einen Referenzstrom zur Verfügung, der sämtlichen Einheiten 1-6 zugeführt wird. Somit leiten sich alle Impulsströme sowie Ströme zur Arbeitspunkteinstellung aus dem Referenzstrom ab, wodurch unerwünschte Offsets auf Grund mangelhaftem Gleichlauf vermieden werden. Es ist auch denkbar, dass die verschiedenen Komponenten des Transmitters von in sich unabhängigen Strömen versorgt werden. Dies ist je nach Anforderungen an Bandbreite, Linearität etc. zu entscheiden.

Der Referenzstrom kann zusätzlich eingestellt werden, um die Genauigkeit der Impulsamplitude der Sendeimpulse zu erhöhen und somit die Einhaltung spezifischer Pulsmasken verschiedener Standards zu garantieren.

Der Digital/Analog-Konverter 1 bildet den Eingang des Transmitters und ist als stromtreibender Digital/Analog-Konverter implementiert. Die am Eingang zugeführten digitalen Daten werden in einem Decoder 13 ausdecodiert, um damit gewichtete Stromquellen 14 zu schalten. Eine interne Regelung (nicht gezeigt) sorgt für die Abstimmung (Matching) der PMOS und NMOS-Stromspiegel innerhalb des Digital/Analog-Konverters.

An den Ausgängen 15 des D/A-Konverters (bestehend aus einem DACP und einem DACN) stehen differenzielle Strompulse zur Verfügung, die einem stromgesteuerten Formfilter 2 zugeführt werden.

Der Formfilter 2 umfasst einen Stromteiler 8 und einen TiefpassfiltEr 9, der eine gewünschte Vorverzerrung der am Ausgang des Transmitters ausgegebenen Sendeimpulse bewirkt und gleichzeitig als Formfilter für die DA-Stromimpulse dient. Der Stromverstärker ist hier als Teiler 8 ausgeführt, der die Amplitude der ankommenden Stromimpulse um einen bestimmten Faktor N teilt. Dies wird hier nur exemplarisch zur Reduzierung der Leistungsaufnahme bzw. des Flächenbedarfs für den nachfolgenden Tiefpassfilter vorgenommen. Es ist auch denkbar den Signalstrom nicht abzuschwächen, sondern zu verstärken. Die Verstärker- bzw. Teilerstufe 8 sollte auf jeden Fall zur Entkopplung zwischen DA-Konverter 1 und Filter 9 implementiert sein.

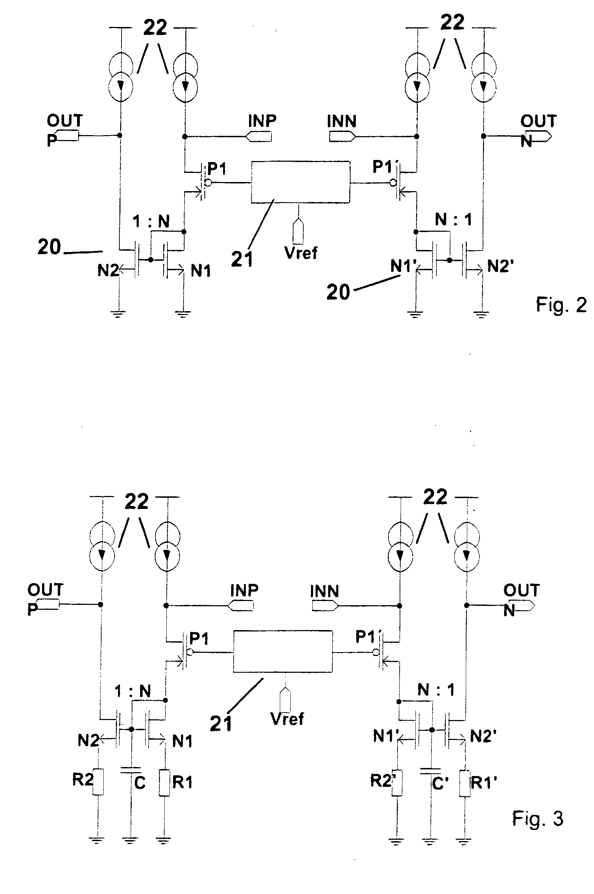

Die Übertragungscharakteristik des Stromverstärkers nach Figur 2 im Frequenzbereich ist vereinfacht durch folgende Gleichung gegeben:

$$A_{n'}(s) = \frac{i_{out}(s)}{i_{in}(s)} \cong \frac{gm_{N1}}{gm_{N2}} * \left( \frac{1}{1 + s * \frac{C_{N1}}{gm_{N1}}} \right) \cong \frac{gm_{N1}}{gm_{N2}} * \left( \frac{1}{1 + \frac{s}{\omega_{iv}}} \right) \qquad [1.1]$$

wobei

- gmN1 die Steilheit des Transistors N1,
- gmN2 die Steilheit des Transistors N2,
- CN1 die Summe der Kapazitäten am Gate von Transistor N1, und
- ωiv die Polfrequenz des parasitären Pols des Spiegels

bezeichnet.

Der anschließende Tiefpassfilter 9 bewirkt die gewünschte Signalformung und Vorverzerrung und arbeitet vorzugsweise auf dem Prinzip der GmC-Filterung. Die Übertragungscharakteristik des Formfilters nach Figur 3 im Frequenzbereich ist gegeben durch folgende Gleichung,

$$A_{itp}(s) = \frac{i_{out}(s)}{i_{in}(s)} \cong \frac{R1}{R2} * \left( \frac{1 + \dfrac{1}{gm_{N1} * R1}}{1 + \dfrac{1}{gm_{N2} * R2}} \right) \left( \frac{1}{1 + \dfrac{s * C_{N1}}{(gm_{N1} + R1)}} \right) \quad [1.2]$$

$$\cong \frac{R1}{R2} * \left( \frac{1 + \dfrac{1}{gm_{N1} * R1}}{1 + \dfrac{1}{gm_{N2} * R2}} \right) \left( \frac{1}{1 + \dfrac{s}{\omega_{tp}}} \right)$$

wobei

- gmN1 die Steilheit des Transistors N1 ist,
- gmN2 die Steilheit des Transistors N2 ist,
- R1 der Degenerationswiderstand von Transistor N1 ist,
- R2 der Degenerationswiderstand von Transistor N2 ist,
- CN1 die Summe der Kapazitäten am Gate von Transistor N1, und
- $\omega$tp die Polfrequenz des dominanten Pols des Filters

bezeichnet.

Die vorverzerrten Stromimpulse werden im Stromverstärker 3 um einen bestimmten Faktor N verstärkt. Die Übertragungsfunktion im Frequenzbereich ist nach Gleichung 1.1 gegeben. Die Implementierung des Stromverstärkers entspricht Figur 2. Der Faktor N ergibt sich als:

$$N = \frac{i_{out}}{i_{in}} \cong \frac{gm_{N1}}{gm_{N2}} \quad [1.3]$$

wobei

- gmN1 die Steilheit des Transistors N1, und
- gmN2 die Steilheit des Transistors N2

bezeichnet.

Am Ausgang des Stromverstärkers 3 ist optional ein Level-Shifter 4 angeschlossen, der eine Transformation der Versorgungsspannung von einer niedrigen Versorgungsspannung VDD1 auf ein höhere Versorgungsspannung VDD2 bewirkt und der es ermöglicht, den davor liegenden Schaltungsteil mit einer niedrigeren Versorgungsspannung VDD1 zu betreiben. Dies hat den wesentlichen Vorteil, dass in modernen Sub-Micron-Technologien für den Signalpfad Transistoren mit dünnerem Gate-Oxyd verwendet werden können. Dies wiederum macht sich deutlich in einer höheren Geschwindigkeit und einer niedrigeren Stromaufnahme bemerkbar.

Der Leitungstreiber 5 umfasst einen Operationsverstärker (OPV) mit Rückkoppelwiederständen Rfb, mittels derer die Umwandlung der Stromimpulse in für die Übertragung erforderliche Spannungsimpulse erfolgt. Diese Konfiguration wird allgemein als Shunt-Shunt-Feedback bezeichnet. Die Übertragungsfunktion im Frequenzbereich ergibt sich somit als:

$$A_n(s) = R_{fb} * \frac{1}{1 + T_{loop}(s)}$$

$$= R_{fb} * \frac{1}{1 + \dfrac{R_{fb} * R_L}{R_{fb} * R_L + R_{OPV} * R_{fb} + R_{OPV} * R_L} * A_{OPA}(s) * \dfrac{R_{IOPA}}{R_{IOPA} + R_{fb}}} \quad [\Omega] \qquad \{1.4\}$$

wobei

- Tloop(s) die offene Schleifenverstärkung,
- RL den Lastwiderstand am Ausgang des Strom-Spannungswandler,
- RGOPV den Ausgangswiderstand des OPV,
- RIOFA der Eingangswiderstand des OPV, und
- AOPA(s) die offene Verstärkung im Frequenzbereich des OPV

bezeichnet. Die Einheit der Übertragungsfunktion ist Ohm [$\Omega$].

Die Übertragungsleitung 10 ist in bekannter Weise durch einen Leitungswiderstand RL abgeschlossen.

Durch die Schaltung zur Offset-Rompensstion 6 wird ein DC-Offset zwischen den Ausgängen des Leitungstreibers XL1 und XL2 ausgeglichen. Diese Schaltung 6 ist vorzugsweise mittels Transkonduktanzstufen aufgebaut ist auf den Ausgang 15 des Digital/Analog-Konverters zurückgeführt. Als Richtlinie für die Auslegung der Offset-Kompensation 6 sollte die Polfrequenz unterhalb des niedrigsten Spektralanteils der Sendeimpulse liegen und eine entsprechende Tiefpasscharakteristik aufweisen.

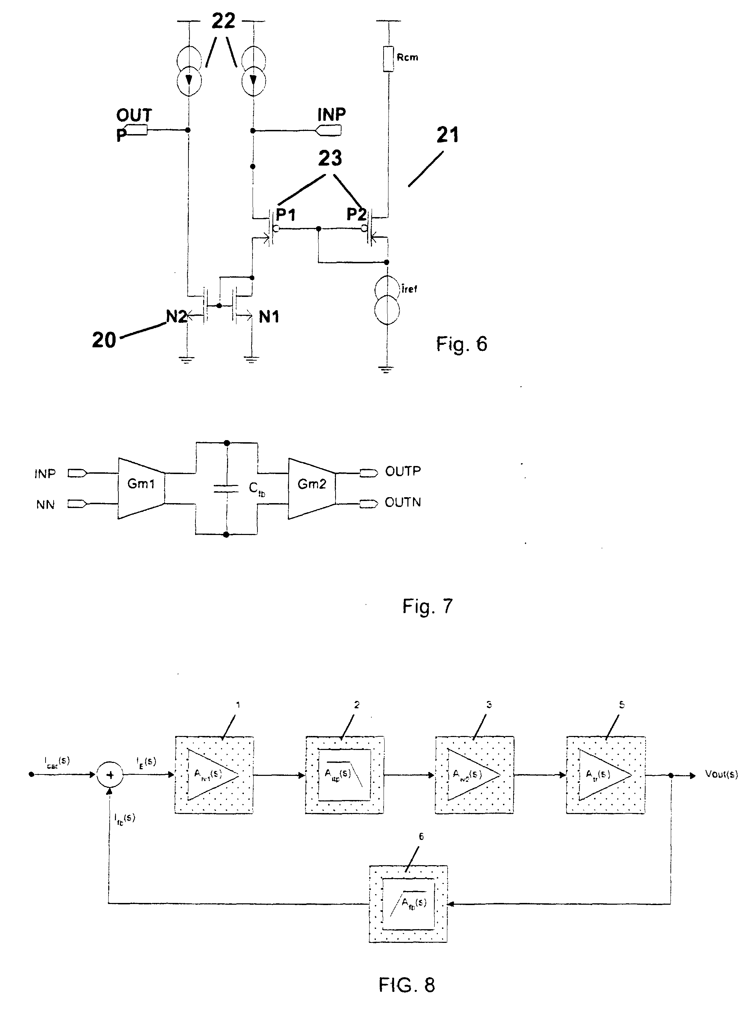

Die Übertragungscharakteristik der Offsetkompensationsschaltung nach Figur 7 im Frequenzbereich ergibt sich vereinfacht als:

$$A_{fb}(s) = \frac{i_{rfb}(s)}{v_{out}(s)} \cong Gm1 * R_{oGm1} * Gm2 * \left( \frac{1}{1 + s * \frac{C_{fb}}{Gm1 + R_{oGm1}}} \right) \cong G_{0\,fb} * \left( \frac{1}{1 + \frac{s}{\omega_{fb}}} \right) \left[ \frac{1}{\Omega} \right] \quad [1.5]$$

wobei

- Gm1 die Steilheit der Transkonduktanz 1,
- Gm2 die Steilheit des Transkonduktanz 2,
- ROGm1 den Ausgangswiderstand der Transkonduktanz Gm1,
- Cfb die Summe der Kapazitäten am Ausgang von Transkonduktanz Gm1,
- $\omega$fb die Polfrequenz des dominanten Pols der Offsetkompensaticn, und
- G0fb die Gesammttranskonduktanz des Feedbacks

bezeichnet.

Fiq.2 zeigt eine vereinfachte Struktur eines Stromverstärkers 8 in Differenzpfad-Technik mit einer Mittenspannungsregelung (Common Mode Feedback). Die differenziellen Eingänge des Stromverstärkers bzw. -Teilers sind mit INP und INN (P: Positiv, N: Negativ) und die entsprechenden Ausgänge mit OUTP und OUTN bezeichnet. Jeder Differenzpfad umfasst einen Stromspiegel 20 mit Spiegeltransistoren N1, N2 bzw. N1, N2'. Durch entsprechende Mehl des Spiegelverhältnisses N an den Stromspiegeltransistoren N1, N2 bzw. N1', N2' kann man entweder den Eingangsstrom um den Faktor N verstärken (N>1) oder um den Faktor N teilen (N≤1). Bei N=1 erhält man Strombuffer. Für den Stromteiler 8 nach Figur 1 gilt im Frequenzbereich die Übertragungsfunktion nach Gleichung 1.1. Das Übersetzungsverhältnis ergibt sich als:

$$N = \frac{i_{out}}{i_{in}} \cong \frac{gm_{N1}}{gm_{N2}} \quad [1.6]$$

wobei

- gmN1 die Steilheit des Transistors N1, und
- gmN2 die Steilheit des Transistors N2

bezeichnet.

Zur Erhöhung des Ausgangswiderstandes der Stromspiegel 20 kann auch mit einem zusätzlichen Kaskodentransistor oder mit einer geregelten Kaskode (nicht gezeigt) gearbeitet werden. Unter der Bezeichnung "Stromspiegel" sollen in dieser Beschreibung alle möglichen Ausführungen verstanden werden. Lediglich zur Erklärung der Funktion beschränkt sich die Figurenbeschreibung auf die einfachste Form von Stromspiegeln.

Mit den Spiegeltransistoren N1, N2 bzw. N1', N2' ist jeweils eine Stromquelle 22 verbunden, die einen vom Referenzstrom $I_{Ref}$ abgeleiteten Strom zuführt.

Die Eingänge INP, INN des Stromverstärkers werden durch eine Gleichspannungsregelung 21 auf ein vorgegebenes Potential festgeklemmt. Durch die Gleichspannungsregelung wird der Arbeitspunkt des Stromspiegels 20 in einem möglichst idealen Bereich gehalten. Die Gleichspannungsregelung umfasst einen Transistor P1 bzw. P1', der zwischen den differenziellen Eingang INP, INN und den Spiegeltransistor N1, N1' geschaltet ist.

Fig.3 zeigt einen Stromfilter, der nahezu identisch wie der Stromverstärker 8 aus Fig.2 aufgebaut ist. Der Strom- bzw. Formfilter besteht ebenfalls aus Stromspiegeln 20 mit Spiegeltransistoren N1, N2 bzw. N1', N2'. Die Transistoren P1 und P1' regeln die Eingangsspannung an den Knoten INP, INN.

An den Source-Anschlüssen der Transistoren N1, N2 bzw. N1', N2' sind Degenerationswiderstände R1, R2 bzw. R1', R2' angeschlossen, die den linearen Aussteuerbereich erhöhen. Das Filterverhalten resultiert aus der Summe des Degenerationswiderstandes R1 (R1') und dem Kehrwert des Leitwertes des Transistors N1 (N1') parallel zu einer Kapazität C (C'), die am Spiegelpunkt der Transistoren N1, N2 bzw. N1', N2' gegen Masse geschaltet ist. Das Produkt aus Widerstandswert und Kapazität ist proportional zur Polfrequenz des Filters.

Es ist zu beachten, dass die Transistoren N2 und N2' einen parasitären Pol durch die Diffusionskapazität am Drain-Anschluß bewirken, der in der Übertragungscharakteristik berücksichtigt werden muss.

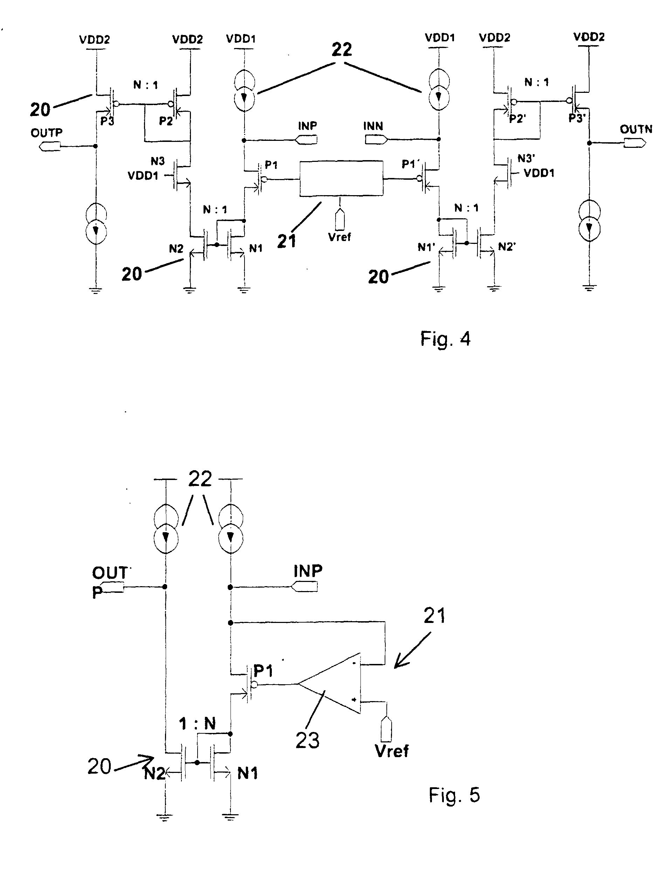

Fig.4 zeigt einen ebenfalls aus Stromspiegeln 20 aufgebauten Level-Shifter 4. Der Level-Shifter 4 dient zur Anpassung der unterschiedlichen Versorgungsspannungen VDD1, VDD2 der Komponenten im Signalpfad. Die Transistoren N1, N1' und N2, N2' bilden jeweils einen Stromspiegel, ebenso wie die Transistoren P2, P2' und P3, P3'. Am Drain-Anschluß des Transistors N2 ist ein Kaskodentransistor N3 (N3') vorgesehen. Dieser muss für eine höhere Betriebsspannung geeignet sein.

Das Potential am Eingang INP, INN dieser Stufe, und somit auch das Potential am Ausgang der vorherigen Stufe, wird durch eine Gleichspannungsregelung 21 konstant gehalten.

Fig. 5 zeigt eine mögliche Realisierung einer Gleichspannungsregelung 21 mit einem Operationsverstärker 21, dessen invertierter Eingang mit dem Signaleingang der Stufe verbunden ist, und dessen nicht-invertierter Eingang an einer Referenzspannung anliegt. Der Ausgang des Operationsverstärkers 23 ist mit dem Gete-Anschluß des Transistors P1 verbunden.

Eine andere Realisierung einer Spannungsregelung 21 ist in Fig. 6 dargestellt. Die Spannungsregelung 21 umfasst einen Stromspiegel 23, der aus den Transistoren P4 und P5 gebildet ist. Am Source-Anschluß des Transistors F5 ist ein Widerstand $R_{CM}$ vorgesehen. Am Source-Anschluß des Transistors P4 ist eine Stromquelle $I_0$ angeschlossen. Der Drain-Anschluß des Transistors P5 ist an einer Referenzstromquelle $I_{REF}$ angeschlossen. Der Transistor P4 ist mit einem Stromspiegel 20 einer der vorstehend beschriebenen Stufen 2-4 verbunden. Durch diese Beschaltung liegt am Eingang ein konstantes Potential $U_0$ an. Die Spannungsregelung kann auch am Ausgang einer Stufe 2-4 vorgesehen sein.

Eine mögliche Realisierung der Rückkoppelschaltung 6 zur Offset-Kompensation ist in Fig. 7 dargestellt. Die Rückkopplung besteht aus einer ersten Transkonduktanz Gml, einer zweiten Transkonduktanz Gm2 und einer Kapazität Cfb. Die Eingangsknoten INP und INN sind im Transmitter nach Fig. 1 mit den Ausgängen XL1 und XL2 verbunden. Die Ausgänge OUTP und OUTN sind mit den Anschlüssen DACN und DACP verbunden. Die Kapazität ist zwischen die Ausgänge der ersten Transkonduktanz Gml bzw. die Eingänge der zweiten Transkonduktanz Gm2 geschaltet. Der dominante Pol der Anordnung wird aus dem Quotienten der Steilheit der ersten Transkonduktanz Gml und der Kapazität Cfb gebildet.

In Fig. 8 ist eine vereinfachte Darstellung der Übertragungskette des Transmitters nach Fig. 1 gezeigt. Die Übertragungsfunktion vom Ausgang des Digital/Analog Konverters bis zum Transmitterausgang berechnet sich unter Berücksichtigung der oben genannten Gleichungen als:

$$G_{TR}(s) = \frac{V_{out}(s)}{i_\varepsilon(s)} = \frac{H_{fw}(s)}{1+A_{fb}(s)*H_{fw}(s)} \qquad [1.7]$$

mit

$$H_{fw}(s) = A_{iv1}(s) * A_{itp}(s) * A_{iv2}(s) * A_{tr}(s)$$

$$= \left( N * \frac{1}{1+\frac{s}{\omega_{iv1}}} \right) * \frac{R1}{R2} \left( \frac{1+\frac{1}{gm_{N1}*R1}}{1+\frac{1}{gm_{N2}*R2}} \right) \left( \frac{1}{1+\frac{s}{\omega_{tp}}} \right) * \left( M * \frac{1}{1+\frac{s}{\omega_{iv2}}} \right) * \left( R_{fb} * \frac{1}{1+T_{loop}(s)} \right)$$

wobei

- GTR(s) die Übertragungsfunktion im Frequenzbereich des gesamten Transmitters,
- Hfw(s) die Vorwärtsverstärkung der Anordnung,
- Afb(s) die Übertragungsfunktion im Frequenzbereich des Feedbacks zur Offsetkompensation,
- ωiv1 die Polfrequenz des parasitären Pols der Verstärkerstufe 8 nach Figur 1,
- ωiv2 die Polfrequenz des parasitären Pols der Verstärkerstufe 3 nach Figur 1, und
- Atr(s) die Übertragungsfunktion im Frequenzbereich des Shunt-Shunt Feedbacks 5 nach Figur 1

bezeichnet.

Als Anhaltspunkt für die zu erwartenden harmonischen Verzerrungen (Harmonic Distortion) innerhalb des Transmitters kann vereinfacht folgender Zusammenhang angegeben werden:

$$HD_2 \cong \frac{1}{8} * \frac{I_{AC}}{I_{DC}} * \frac{\omega}{gm_{Nx}/C_{inNx}} = \frac{1}{8} * \frac{I_{AC}}{I_{DC}} * \frac{\omega}{\omega_{DP}} \qquad [1.8]$$

wobei

- HD2 die zweite harmonische des Transmitter,
- IAC die Amplitude des Signalstroms,
- IDC der Verscrgungsstrom im Transistor,
- ω die aktuelle Kreisfrequenz des Signalstroms,
- ωDP der dominante Pol im Vorwärtssignalpfad des Transmitter,
- gmNx die Steilheit des Transistors, an dem der dominante Pol entsteht, und
- CinNx die Summenkapazität am Eingang oder Ausgang des Transistors, an dem der dominante Pol entsteht,

bezeichnet.

Aus Gleichung 1.8 ist ein wesentlicher Vorteil der Erfindung erkennbar. Die zweite harmonische Verzerrung HD2 kann durch geeignete Wahl der Bandbreite, durch Reduzierung der parasitären Knotenkapazitäten und geeignetem Verhältnis von Signalstrom zum Versorgungsstrom zur Arbeitspunkteinstellung optimal gewählt werden.

Die einzelnen Komponenten des Transmitters sind unabhängig von den Einzelheiten der praktischen Realisierung mit Hilfe der angegebenen Gleichungen entwerfbar und realisierbar, und stellen auch bei niedriger interner Versorgungsspannung eine stabile und zuverlässige Realisierung zur Pulsgenerierung und Übertragung von Daten dar.

**Patentansprüche**

1. Transmitter zur Übertragung digitaler Daten über eine Ubertragungsleitung (10), umfassend

- einen am Eingang des Transmitters angeordneten stromtreibenden Digital/Analog-Wandler (1);
- einen strombetriebenen Formfilter (2) zum Formen der vom Digital/Analog-Wandler (1) gelieferten Stromimpulse;
- einen dem Formfilter (2) nachgeordneten Leitungstreiber (5), der eine Strom/Spannungs-Konvertierung durchführt; und
- eine Schaltung zur Offset-Kompensation (6),

**dadurch gekennzeichnet,**
**dass** die Schaltung zur Offset-Kompensation (6) in einem Rückkoppelpfad (12) des Transmitters angeordnet ist und dass der Formfilter (2) mit Stromspiegeln (20) aufgebaut ist, wobei die Stromspiegel (20) einen Spannungsregler (21) aufweisen, der die Spannung an einem Signaleingang (IN) und/oder einem Ausgang (OUT) der Stromspiegel (20) im wesentlichen konstant halt.

2. Transmitter nach Anspruch 1,
**dadurch gekennzeichnet,**
**dass** am Ausgang des Digital/Analog-Wandlers (1) ein strombetriebener Verstarker (8) zur Isolation des Konverterausgangs von nachfolgenden Schaltkreisen vorgesehen ist.

3. Transmitter nach Anspruch 2,
**dadurch gekennzeichnet,**
**dass** der strombetriebene Verstärker (8) den vom Digital/Analog-Konverter (1) gelieferten Strom um einen Faktor N teilt.

4. Transmitter nach Anspruch 2 oder 3,
**dadurch gekennzeichnet,**
**dass** der Verstärker (8) einen Stromspiegel (20) aufweist.

5. Transmitter nach einem der vorhergehenden Ansprüche,
**dadurch gekennzeichnet,**
**dass** der Formfilter (2) einen strombetriebenen Tiefpassfilter (9) aufweist, der dem Verstärker (8) nachgeschaltet ist.

6. Transmitter nach Anspruch 5,
**dadurch gekennzeichnet,**
**dass** der Tiefpassfilter (9) einen Stromspiegel (20) aufweist.

7. Transmitter nach einem der vorhergehenden Ansprüche,
**dadurch gekennzeichnet,**
**dass** der Formfilter (2) eine gewünschte Vorverzerrung der am Ausgang des Transmitters gesendeten Sendeimpulse bewirkt.

8. Transmitter nach einem der Ansprüche 5 bis 7,
**dadurch gekennzeichnet,**
**dass** die Grenzfrequenz des Tiefpassfilters (9) und damit dessen Vorverzerrung schaltbar ist.

9. Transmitter nach einem der vorhergehenden Ansprüche,
**dadurch gekennzeichnet,**
**dass** ein stromgesteuerter Stromverstärker (3) im Signalpfad (11) des Transmitters vorgesehen ist.

10. Transmitter nach einem der vorhergehenden Ansprüche,
**dadurch gekennzeichnet,**
**dass** ein stromgesteuerter Level-Shifter (4) im Signalpfad (11) des Transmitters angeordnet ist, der eine niedrigere Versorgungsspannung (VDD1) auf eine höhere Versorgungsspannung (VDD2) umsetzt.

11. Transmitter nach Anspruch 9,
**dadurch gekennzeichnet,**
**dass** der Stromverstärker (3) einen Stromspiegel (20) aufweist.

12. Transmitter nach Anspruch 10,
**dadurch gekennzeichnet,**
**dass** der Level-Shifter (4) einen Stromspiegel (20) aufweist.

13. Transmitter nach einem der vorhergehenden Ansprüche,
**dadurch gekennzeichnet,**
**dass** die Schaltung zur Offset-Kompensation (6) aus Transkonduktanzstufen aufgebaut ist.

**14.** Transmitter nach einem der vorhergehenden Ansprüche,
**dadurch gekennzeichnet,**
**dass** die Schaltung zur Offset-Kompensation (6) eine Tiefpasscharakteristik aufweist.

**15.** Transmitter nach einem der vorhergehenden Ansprüche,
**dadurch gekennzeichnet,**
**dass** der Transmitter in Differenzpfad-Technik aufgebaut ist.

**Claims**

**1.** Transmitter for transmission of digital data via a transmission line (10), comprising

- a current-driving digital/analogue converter (1) which is arranged at the input of the transmitter;
- a current-operated form filter (2) for forming the current pulses which are supplied from the digital/analogue converter;
- a line driver (5) which is arranged downstream from the form filter (2) and carries out current/voltage conversion; and
- a circuit for offset compensation (6),

**characterized**
**in that** the circuit for offset compensation (6) is arranged in a feedback path (12) of the transmitter, and in that the form filter (2) is formed with current mirrors (20), with the current mirrors (20) having a voltage regulator (21) which essentially stabilizes the voltage at a signal input (IN) and/or at an output (OUT) of the current mirrors (20).

**2.** Transmitter according to Claim 1,
**characterized**
**in that** a current-operated amplifier (8) is provided at the output of the digital/analogue converter (1) in order to isolate the converter output from the downstream circuits.

**3.** Transmitter according to Claim 2,
**characterized**
**in that** the current-operated amplifier (8) divides the current that is supplied from the digital/analogue converter (1) by a factor of N.

**4.** Transmitter according to Claim 2 or 3,
**characterized**
**in that** the amplifier (8) has a current mirror (20).

**5.** Transmitter according to one of the preceding claims,
**characterized**
**in that** the form filter (2) has a current-operated low-pass filter (9) which is connected downstream from the amplifier (8).

**6.** Transmitter according to Claim 5,
**characterized**
**in that** the low-pass filter (9) has a current mirror (20).

**7.** Transmitter according to one of the preceding claims,
**characterized**
**in that** the form filter (2) produces desired pre-emphasis of the transmission pulses which are transmitted at the output of the transmitter.

**8.** Transmitter according to one of Claims 5 to 7,
**characterized**
**in that** the cut-off frequency of the low-pass filter (9), and thus its pre-emphasis, are switchable.

**9.** Transmitter according to one of the preceding claims,

**characterized**

**in that** a current-controlled current amplifier (3) is provided in the signal path (11) of the transmitter.

10. Transmitter according to one of the preceding claims,
**characterized**
**in that** a current-controlled level shifter (4) is arranged in the signal part (11) of the transmitter, and converts a lower supply voltage (VDD1) to a higher supply voltage (VDD2).

11. Transmitter according to Claim 9,
**characterized**
**in that** the current amplifier (3) has a current mirror (20).

12. Transmitter according to Claim 10,
**characterized**
**in that** the level shifter (4) has a current mirror (20).

13. Transmitter according to one of the preceding claims,
**characterized**
**in that** the circuit for offset compensation (6) is formed from transconductance stages.

14. Transmitter according to one of the preceding claims,
**characterized**
**in that** the circuit for offset compensation (6) has a low-pass filter characteristic.

15. Transmitter according to one of the preceding claims,
**characterized**
**in that** the transmitter uses differential path technology.


**Revendications**

1. Emetteur pour la transmission de données numériques par l'intermédiaire d'une ligne de transmission (10), comprenant

- un convertisseur numérique-analogique (1) commandant le courant et placé à l'entrée de l'émetteur ;
- un filtre de forme (2) commandé par le courant pour la mise en forme des impulsions de courant fournies par le convertisseur numérique-analogique (1) ;
- un transmetteur de ligne (5) qui est placé en aval du filtre de forme (2) et qui effectue une conversion courant / tension ; et
- un circuit pour la compensation d'offset (6),

   **caractérisé en ce que** le circuit pour la compensation d'offset (6) est placé dans un chemin de rétroaction (12) de l'émetteur et **en ce que** le filtre de forme (2) est construit avec des miroirs de courant (20), les miroirs de courant (20) comportant un régulateur de tension (21) qui maintient sensiblement constante la tension à une entrée de signal (IN) et/ou à une sortie (OUT) des miroirs de courant (20).

2. Emetteur selon la revendication 1,
   **caractérisé en ce que**, à la sortie du convertisseur numérique-analogique (1), il est prévu un amplificateur (8) commandé par le courant pour que la sortie de convertisseur soit isolée des circuits suivants.

3. Emetteur selon la revendication 2,
   **caractérisé en ce que** l'amplificateur commandé par le courant (8) divise par un facteur N le courant fourni par le convertisseur numérique-analogique (1).

4. Emetteur selon la revendication 2 ou 3,
   **caractérisé en ce que** l'amplificateur (8) comporte un miroir de courant (20).

5. Emetteur selon l'une des revendications précédentes,

**caractérisé en ce que** le filtre de forme (2) comporte un filtre passe-bas (9) qui est commandé par le courant et qui est monté en aval de l'amplificateur (8) .

6.  Emetteur selon la revendication 5,
    **caractérisé en ce que** le filtre passe-bas (9) comporte un miroir de courant (20).

7.  Emetteur selon l'une des revendications précédentes,
    **caractérisé en ce que** le filtre de forme (2) provoque une préaccentuation souhaitée des impulsions d'émission émises à la sortie de l'émetteur.

8.  Emetteur selon l'une des revendications 5 à 7,
    **caractérisé en ce que** la fréquence de coupure du filtre passe-bas (9) et donc la préaccentuation de celui-ci sont commutables.

9.  Emetteur selon l'une des revendications précédentes,
    **caractérisé en ce qu'**un amplificateur de courant (3) commandé par courant est prévu dans le trajet du signal (11) de l'émetteur.

10. Emetteur selon l'une des revendications précédentes,
    **caractérisé en ce qu'**un dispositif de décalage de niveau (4) commandé par courant est placé dans le trajet du signal (11) de l'émetteur et convertit une tension d'alimentation inférieure (VDD1) en une tension d'alimentation supérieure (VDD2).

11. Emetteur selon la revendication 9,
    **caractérisé en ce que** l'amplificateur de courant (3) comporte un miroir de courant (20).

12. Emetteur selon la revendication 10,
    **caractérisé en ce que** le dispositif de décalage de niveau (4) comporte un miroir de courant (20).

13. Emetteur selon l'une des revendications précédentes,
    **caractérisé en ce que** le circuit pour la compensation d'offset (6) est construit à partir d'étages à transconductance.

14. Emetteur selon l'une des revendications précédentes,
    **caractérisé en ce que** le circuit pour la compensation d'offset (6) a une caractéristique de passe-bas.

15. Emetteur selon l'une des revendications précédentes,
    **caractérisé en ce que** l'émetteur est construit selon une technique à chemins différentiels.

Fig. 1

Fig. 2

Fig. 3

Fig. 4

Fig. 5

Fig. 6

Fig. 7

FIG. 8